# DEMANDE DE BREVET EUROPEEN

(11) **EP 4 368 480 A1**
(43) Date de publication de la demande: **15.05.2024**
(21) Numéro de dépôt: 23206172.1
(22) Date de dépôt: 26.10.2023
(51) Int. Cl.: B62D 49/08, B62D 49/06

(54) **ÉLEMENT DE LESTAGE COMPORTANT UN CORPS CREUX ROTOMOULÉ REMPLI AU MOINS EN PARTIE DE BÉTON SOLIDIFIÉ EN PLACE**

(30) Priorité: 08.11.2022 FR 2211625
(71) Demandeur: Pateer France, 35170 Bruz (FR)
(72) Inventeur: PATEER, Jack, 4564 AG Sint Jansteen (NL)
(74) Mandataire: Schmidt, Martin Peter

(57) **Abrégé**

Un élément de lestage (10) adapté à être fixé à l'avant ou à l'arrière d'un véhicule, qui comporte un corps creux rotomoulé (100) délimitant un volume et dans lequel ledit volume est rempli au moins en partie d'un mélange de béton comportant des inserts, ledit mélange de béton étant coulé dans le volume puis solidifié en place.

Un véhicule comportant un élément de lestage objet de l'invention.

Un procédé de fabrication d'un élément de lestage objet de l'invention.

## Description

### DOMAINE TECHNIQUE DE L'INVENTION

La présente invention vise un élément de lestage adapté à être fixé à l'avant ou à l'arrière d'un véhicule, notamment à l'avant ou à l'arrière d'un engin agricole, d'un engin de travaux publics ou d'un engin de chantier. La présente invention vise en outre un véhicule équipé d'un tel élément de lestage et un procédé de fabrication d'un tel élément de lestage.

### ÉTAT DE LA TECHNIQUE

L'art antérieur connait l'utilisation d'éléments de lestage fixés à l'avant ou à l'arrière d'un véhicule afin d'équilibrer le véhicule notamment pour compenser le poids d'une charge attelée sur l'extrémité arrière du véhicule ou le poids d'un équipement fixé à l'avant du véhicule. Ces éléments de lestage ont pour fonction d'éviter le renversement d'un véhicule.

Le plus souvent, les dispositifs de lestage, aussi appelées ballastages, comportent un bras de ballastage configuré pour recevoir le lestage afin de déporter ledit lestage vers l'avant ou vers l'arrière du véhicule, afin d'augmenter l'effet de déplacement du centre de gravité. Dans des exemples connus, le dispositif de ballastage comporte un bras de ballastage amovible permettant d'éloigner ou de rapprocher le l'élément de lestage du véhicule. L'art antérieur connait par exemple les dispositifs de ballastage pour engin agricole objet des documents EP 3 636 520 A1 et EP 2 042 410 B1.

L'élément de lestage peut comporter un ensemble de lests pouvant être ajoutés ou enlevés pour constituer l'élément de lestage. Par exemple les lests peuvent être des éléments métalliques, tels que des blocs ou plaques en fonte, qui sont positionnés sur un support relié à l'engin agricole. L'élément de lestage peut comporter du béton. Cependant ce matériau peut se dégrader lorsqu'il est exposé aux conditions extérieures normales d'exploitation d'un engin agricole, notamment sous l'effet d'un choc. Ainsi, il existe un besoin de fournir une alternative pratique, compacte, durable et esthétique aux contrepoids agricoles.

### OBJETS DE L'INVENTION

La présente invention vise à remédier à tout ou partie des inconvénients des contrepoids connus de l'art antérieur.

À cet effet, selon un premier objet, la présente invention vise un élément de lestage ou contrepoids adapté à être fixé à l'avant ou à l'arrière d'un véhicule, qui comporte un corps creux rotomoulé délimitant un volume. Ledit volume est rempli au moins en partie d'un mélange de béton, ledit mélange de béton ayant été coulé à l'état liquide dans le volume dudit corps creux puis solidifié en place. Ledit béton comporte préférentiellement des inserts.

Grâce à ces dispositions, le corps creux rotomoulé constitue une coque extérieure robuste et esthétique qui peut être produite en série à un coût assez faible. L'utilisation d'une coque rotomoulée facilite le procédé de production de l'élément de lestage par rapport aux procédés de production des éléments de lestage connus de l'art antérieur.

De plus le corps creux rotomoulé permet d'obtenir un élément de lestage principalement constitué de béton tout en évitant une étape de démoulage du béton. En effet, le béton reste à demeure dans le corps creux rotomoulé. L'utilisation d'inserts dans le béton permet d'ajuster la densité du béton pour obtenir un élément de lestage d'un poids souhaité sans modifier les dimensions du corps creux rotomoulé. Ainsi, l'élément de lestage obtenu est plus compact.

Il faut aussi souligner que le corps creux rotomoulé constitue une enveloppe protectrice qui protège au moins en partie le bloc de béton solidifié en place des chocs et de l'humidité.

Enfin, le corps creux rotomoulé présente un aspect extérieur esthétique qui peut présenter, grâce à la technique de rotomoulage, tout aspect extérieur souhaité par le fabricant.

L'élément de lestage objet de l'invention est adapté à être accroché à l'avant ou à l'arrière d'un véhicule. Ce véhicule est, à titre d'exemple, un engin agricole, un engin de travaux publics ou un engin de chantier. Plus précisément il peut s'agir d'un tracteur, d'un véhicule horticole ou viticole, d'un engin muni d'un bras fixe ou télescopique (tel qu'une grue), ou encore d'un chariot élévateur.

Préférentiellement, l'élément de lestage objet de l'invention est un équipement adapté à être attaché de manière amovible, à un véhicule sans modifier le châssis ni la carrosserie dudit véhicule. Préférentiellement, ledit véhicule est un engin agricole, plus particulièrement un tracteur.

Dans des modes de réalisation, le béton comporte des inserts, qui ont la fonction d'augmenter la densité massique du béton. Ces inserts sont des matériaux solides qui sont avantageusement choisis parmi la fonte, les oxydes métalliques, la calamine et la magnétite. Par exemple, le béton peut comporter des oxydes de fer.

Préférentiellement, les inserts sont ajoutés au béton sous forme de poudre, de granules ou de fragments de petite taille. Par exemple le diamètre maximal des inserts est compris entre 0,05 et 50 millimètres, préférentiellement entre 0,1 et 50 millimètres, et encore plus préférentiellement le diamètre maximal des inserts est compris entre 1 et 30 millimètres.

Grâce à ces dispositions, les inserts de petites tailles peuvent être répartis de manière homogène dans le béton, de sorte que l'élément de lestage obtenu après solidification en place du béton présente une répartition du poids sensiblement uniforme.

Dans des modes de réalisation, la densité du béton coulé dans le corps creux rotomoulé est comprise entre 2,4 g/cm³ et 4,2 g/cm³.

Le corps creux rotomoulé délimite un volume destiné à recevoir du béton liquide à solidifier en place. Dans des modes de réalisation, le corps creux rotomoulé comporte une ouverture sur sa face orientée vers le sol en conditions d'utilisation normale de l'élément de lestage et ladite ouverture est configurée pour recevoir le mélange de béton lors du coulage dans le corps creux rotomoulé.

Préférentiellement, le corps creux rotomoulé comporte une unique ouverture.

Préférentiellement, aucune des faces extérieures du corps creux rotomoulé à l'exception de la face orientée vers le sol en conditions d'utilisation normale de l'élément de lestage ne comporte d'ouvertures.

Grâce à ces dispositions, l'élément de lestage présente, vers le haut et vers les côtés des faces pleines du corps rotomoulé. Ces faces pleines, c'est-à-dire non percées d'ouvertures visibles, présentent une résistance améliorée au choc et aux intempéries. De plus, sur l'élément de lestage, l'ensemble des faces visibles sont des faces pleines du corps rotomoulé, ce qui donne un aspect extérieur plaisant à l'élément de lestage.

Dans des modes de réalisation, le corps creux rotomoulé comporte au moins une nervure parcourant au moins une partie de la surface du corps creux rotomoulé. On entend par « nervure » une partie saillante, généralement longue et étroite qui s'étend sur tout ou partie du pourtour d'une face du corps creux rotomoulé. Préférentiellement, la nervure est positionnée sur une face interne du corps creux rotomoulé. Préférentiellement, la nervure parcoure tout le pourtour d'une face interne du corps creux rotomoulé.

Grâce à ces dispositions, la rigidité du corps creux rotomoulé est renforcée.

Dans des modes de réalisation, ladite nervure est positionnée au niveau de ladite ouverture.

Grâce à ces dispositions, la nervure présente la double fonction de renforcer la rigidité structurelle du corps creux rotomoulé et de former un rebord utile à la prévention du débordement du béton lors du coulage du mélange de béton dans le corps creux rotomoulé.

Dans des modes de réalisation, le corps creux rotomoulé est monolithique et formé d'une seule matière.

Dans des modes de réalisation, la matière formant le corps creux rotomoulé est du polyéthylène.

Dans des modes de réalisation, une armature métallique est insérée dans le volume formé par le corps creux rotomoulé préalablement à la solidification en place du béton.

Dans des modes de réalisation, le corps creux rotomoulé comporte, sur la face interne du corps creux, des supports configurés pour supporter l'armature métallique.

Grâce à ces dispositions, l'armature métallique peut être maintenue en place dans une position ciblée au cours du coulage et de la solidification du mélange de béton.

À titre d'exemple, les supports sont des reliefs en forme de « U » formant saillie sur la surface intérieure du corps creux. Les reliefs font partie intégrante du corps creux rotomoulé. Ainsi, l'armature métallique, par exemple comportant des bâtons en métal, peut être positionnée sur les supports, de sorte que les bâtons en métal restent en place par gravité, supportés par les supports en « U », avant d'être submergés par le béton et bloqués en place lors de la solidification du béton.

Dans des modes de réalisation, l'élément de lestage comporte des moyens de fixation à l'avant ou à l'arrière d'un véhicule comportant une pluralité de tiges noyées dans le béton, lesdites tiges étant solidaires d'au moins une platine accolée à une paroi externe du corps creux rotomoulé.

Dans des modes de réalisation, au moins une cavité de dimensions similaires aux dimensions d'une platine est prévue sur la paroi externe du corps creux rotomoulé et la platine est logée et fixée en place dans ladite cavité.

Dans des modes de réalisation, au moins une tige est une tige filetée et la paroi du corps creux rotomoulé est enserrée entre ladite platine et au moins un écrou vissé sur la tige filetée.

Dans des modes de réalisation, l'élément de lestage comporte au moins un logement formé dans la paroi du corps creux rotomoulé configuré pour abriter une partie d'une tige filetée et au moins une partie d'un écrou.

Dans des modes de réalisation, une platine sur la face supérieure de l'élément de lestage et deux platines, sur les faces latérales de l'élément de lestage.

Dans des modes de réalisation, le corps rotomoulé comporte au moins une cavité configurée pour y positionner des moyens d'éclairage ou des éléments de signalétique routière.

Grâce à ces dispositions, les moyens d'éclairage ou les éléments de signalétique routière, tels que des phares ou feux de signalisation, permettent une meilleure visibilité de l'élément de lestage et du véhicule auquel il est accroché.

Selon un deuxième aspect, l'invention vise un véhicule comportant un élément de lestage qui comporte des moyens de fixation de l'élément de lestage à l'avant ou à l'arrière du véhicule, ledit élément de lestage comportant un corps creux rotomoulé délimitant un volume, ledit volume étant rempli au moins en partie d'un béton à comportant des inserts, ledit béton étant coulé à l'état liquide dans le volume puis solidifié en place.

Dans des modes de réalisation, l'élément de lestage est fixé de manière amovible auxdits moyens de fixation.

Selon un troisième aspect, l'invention vise un procédé de fabrication d'un élément de lestage adapté à être fixé à l'avant ou à l'arrière d'un véhicule, qui comporte :
- une étape de fourniture d'un corps creux rotomoulé délimitant un volume,
- une étape de fourniture d'un mélange de béton liquide comportant des inserts,
- une étape de coulage du mélange de béton liquide dans le volume délimité par le corps creux rotomoulé et
- une étape de solidification en place du béton dans le corps creux rotomoulé.

Dans des modes de réalisation, le corps creux rotomoulé comporte une ouverture sur sa face orientée vers le sol en conditions d'utilisation normale de l'élément de lestage et, lors des étapes de coulage du béton et de solidification en place du béton, le corps creux rotomoulé est positionné de sorte à orienter ladite ouverture vers le ciel pour recevoir la coulée de mélange de béton.

Grâce à ces dispositions, une ouverture peut être aménagée dans la face inférieure (orientée vers le sol en conditions normales d'utilisation) du corps creux rotomoulé. Cette ouverture peut être aussi large que nécessaire pour faciliter l'étape de coulage du béton. Une fois le procédé de fabrication d'un élément de lestage achevé, l'élément de lestage est retourné à l'endroit avec ladite ouverture orientée vers le sol. Ainsi, ladite ouverture n'est pas visible depuis l'extérieur ce qui améliore l'aspect esthétique de l'élément de lestage et évite de nécessiter la présence d'une ouverture sur la face supérieure (orientée vers le ciel en conditions normales d'utilisation) ou sur le côté de l'élément de lestage. Une telle ouverture serait à même de constituer une faiblesse, une moindre résistance au choc, ou encore une moindre étanchéité sur la face supérieure ou sur les côtés de l'élément de lestage qui sont plus susceptibles de subir des chocs ou d'être plus exposés aux intempéries que la face inférieure du corps creux rotomoulé.

Dans des modes de réalisation, le procédé comporte, préalablement à l'étape de coulage du mélange de béton dans le volume délimité par le corps creux rotomoulé, une étape de positionnement d'une armature métallique dans le corps creux rotomoulé.

Certains buts, avantages et caractéristiques particulières du véhicule et du procédé de fabrication objets de la présente invention étant similaires à ceux de l'élément de lestage objet de la présente invention, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier de l'élément de lestage et du procédé de fabrication objets de la présente invention, en regard des dessins annexés, dans lesquels :
[Fig 1] représente une vue schématique et en perspective d'un élément de lestage selon un premier mode de réalisation particulier de l'invention,
[Fig 2] représente une vue schématique de face d'un élément de lestage selon le premier mode de réalisation particulier de l'invention,
[Fig 3] représente une vue schématique et en perspective du le corps creux rotomoulé mis en oeuvre dans le premier mode de réalisation particulier d'un élément de lestage objet de l'invention,
[Fig 4] représente une vue schématiquement en coupe transversale d'un élément de lestage selon le premier mode de réalisation particulier de l'invention,
[Fig 5] représente une vue schématiquement en perspective d'un élément de lestage selon le premier mode de réalisation particulier de l'invention,
[Fig 6] représente une vue schématique en perspective d'un élément de lestage selon le premier mode de réalisation de l'invention, le corps rotomoulé étant représenté partiellement transparent de sorte à faire apparaitre une armature métallique et des moyens de fixation de l'élément de lestage à l'avant ou à l'arrière d'un véhicule,
[Fig 7] représente une vue schématique et en perspective de l'armature métallique et des moyens de fixation de l'élément de lestage à l'avant ou à l'arrière d'un véhicule de la figure 6,
[Fig 8] représente une vue schématique et en perspective d'un élément de lestage selon un deuxième mode de réalisation particulier de l'invention, et
[Fig 9] représente, schématiquement et sous forme d'un logigramme, une succession d'étapes particulières du procédé objet de la présente invention.

Dans les figures annexées ainsi que dans la description détaillée de l'invention, les repères numériques à deux ou trois chiffres désignent :
10, 20 un élément de lestage
100, 200 un corps creux rotomoulé
101 la face avant du corps creux rotomoulé
102 et 103 les faces latérales du corps creux rotomoulé
104 la face supérieure du corps rotomoulé
105 la face inférieure du corps rotomoulé
106 la face arrière du corps creux rotomoulé
110 les parois internes du corps creux rotomoulé
115 le volume délimité par le corps creux rotomoulé
120 un emplacement pour moyens de fixation de l'élément de lestage à l'avant ou à l'arrière du véhicule
130 une nervure
151, 152, 153, 154 des trous pour la fixation de platines
160 une armature métallique (treillis de fer à béton)
171, 172 des tiges filetées verticales
173, 174 des tiges filetées horizontales
180, 181 des logements de la fixation de platines
191, 192, 193 des platines de fixation
295, 296, 297 et 298 des cavités dans le corps creux rotomoulé 200

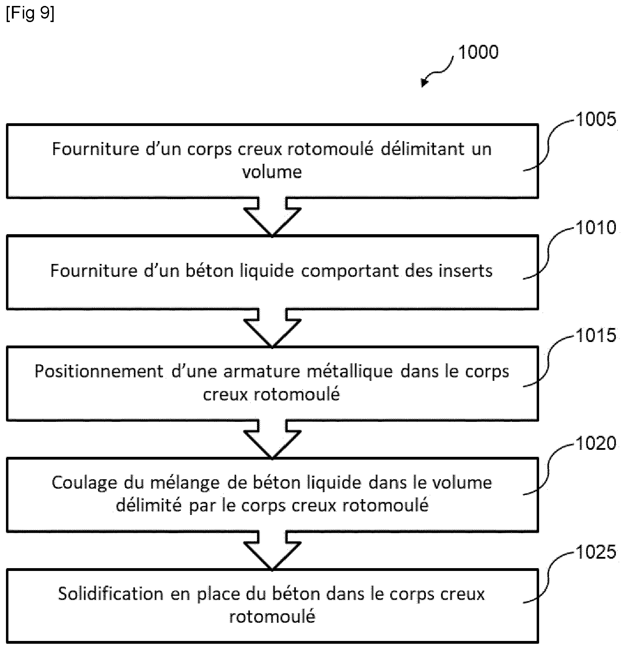

Les repères numériques à quatre chiffres désignent les étapes de procédé, ces étapes sont listées en figure 9.

### DESCRIPTION DÉTAILLÉE DE L'INVENTION

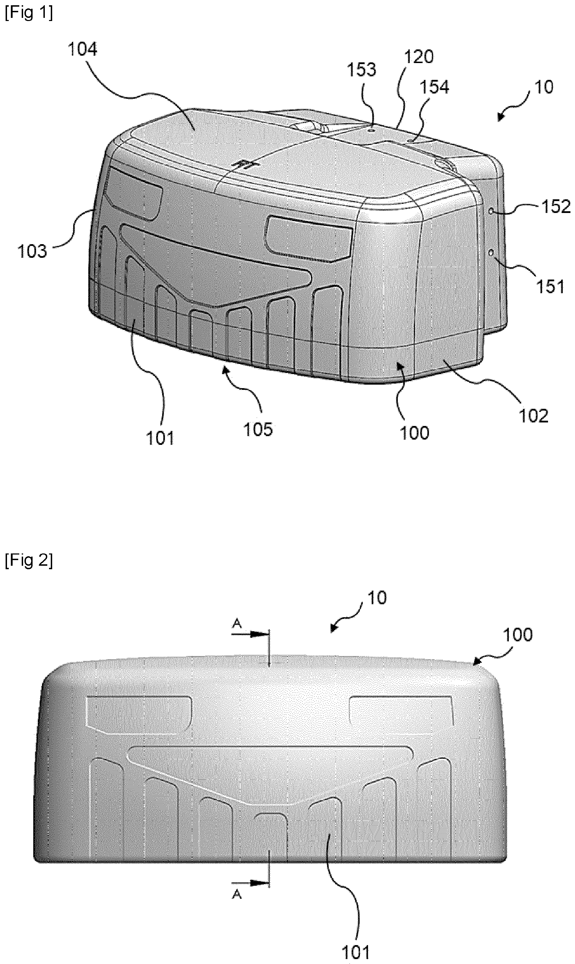

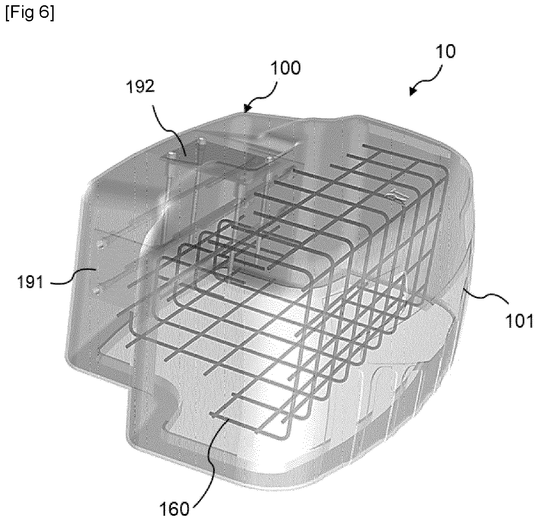

La présente description est donnée à titre non limitatif, chaque caractéristique d'un mode de réalisation pouvant être combinée à toute autre caractéristique de tout autre mode de réalisation de manière avantageuse. On note, dès à présent, que les figures 1 à 8 sont, chacune, à l'échelle mais, qu'entre elles, les échelles varient.

On observe en figures 1 et 2, un élément de lestage 10 selon un premier mode de réalisation particulier de l'invention.

L'élément de lestage 10 est adapté à être fixé à l'avant ou à l'arrière d'un véhicule (non représenté). Ledit véhicule est, à titre d'exemple, un engin agricole, un engin de travaux publics ou un engin de chantier. L'utilisation de l'élément de lestage 10 sur un véhicule permet de compenser le déséquilibre de charge causé par un équipement accroché au véhicule et ainsi de prévenir le risque que le véhicule ne se renverse.

L'élément de lestage 10 comporte un corps creux rotomoulé 100. Le corps creux rotomoulé 100 comporte une face 101 que l'on appellera « face avant » et une face 106 que l'on appellera « face arrière ». Il sera bien compris que cette face peut être orientée vers l'avant ou vers l'arrière du véhicule respectivement si l'élément de lestage est fixé à l'avant ou à l'arrière du véhicule. On appelle face inférieure la face 105 du corps rotomoulé qui est orientée vers le sol dans le cadre d'une utilisation normale de l'élément de lestage 10. On appelle face supérieure 104 la face orientée vers le ciel dans des conditions normales d'utilisation de l'élément de lestage 10. Les faces 102 et 103 sont appelées faces latérales. Dans la suite de la présente description, on utilise les termes de « face avant », « face arrière » et « faces latérale » indifféremment pour désigner les faces de l'élément de lestage 10 ou du corps creux rotomoulé 100. Enfin, on appellera « face interne » les faces du corps creux rotomoulée orientées vers l'intérieur volume délimité par le corps creux rotomoulé et « face externe » les faces du corps creux rotomoulé orientées vers l'extérieur du volume délimité par le corps creux rotomoulé.

Le corps creux rotomoulé 100 est obtenu par rotomoulage. Le rotomoulage, ou moulage par rotation, est un procédé de mise en forme par moulage de matières plastiques. Le procédé de fabrication d'une pièce par rotomoulage étant bien connu de l'art antérieur, il n'est pas décrit en détail ici. Préférentiellement, le corps creux rotomoulé 100 est une pièce monolithique rigide et formée uniquement de polyéthylène (PE).

Dans d'autres modes de réalisation, le corps creux rotomoulé 100 comporte du polychlorure de vinyle (PVC), du polypropylène (PP), du polycarbonate (PC), des polyamides (PA), de l'acrylonitrile butadiène styrène (ABS), des acryliques, du polyester ou encore du polystyrène.

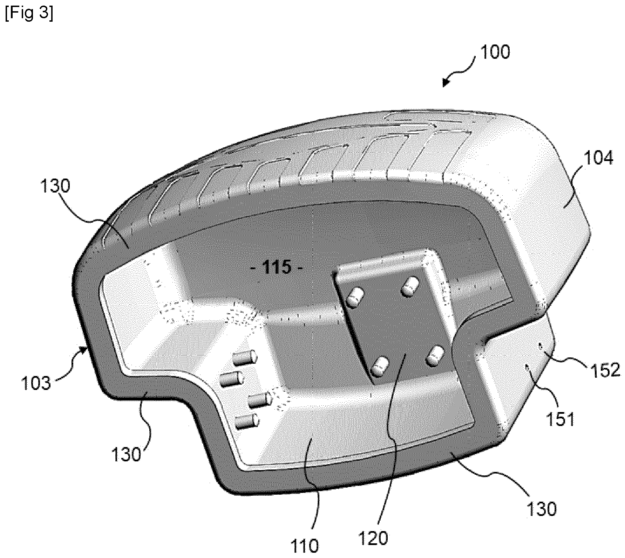

La structure du corps rotomoulé 100 sera mieux comprise au regard de la figure 3, qui montre la face inférieure du corps creux rotomoulé en vue perspective. Le corps creux 100 délimite un volume 115 délimité par la paroi interne 110 du corps creux rotomoulé 100. Ledit volume 115 est configuré pour être rempli au moins en partie d'un mélange de béton. Le béton formera ainsi l'essentiel du poids de l'élément de lestage 10. Le coulage du béton dans le corps creux rotomoulé et la composition du mélange de béton pouvant être utilisé seront mieux compris à la lecture de la description du procédé de fabrication d'un élément de lestage.

On souligne que chacune des faces 104, 103, et 102 du corps creux rotomoulé 100, à l'exception de la face inférieure 105 sont pleines, c'est-à-dire fermées. De sorte que le corps creux rotomoulé est ouvert seulement sur sa face inférieure. Ces dispositions offrent l'avantage de permettre une fabrication facilitée de l'élément de lestage, tout protégeant la partie en béton de l'élément de lestage d'être protégée des chocs et des intempéries.

Préférentiellement, le corps rotomoulé 100 comporte au moins une nervure 130 parcourant au moins une partie de la surface interne 110 du corps creux rotomoulé. Dans l'exemple de réalisation illustré en figure 3, la nervure 130 est présente sur tout le pourtour de la face interne du corps creux rotomoulé, au niveau de l'ouverture présente sur la face inférieure du corps creux rotomoulé. En d'autres termes, la nervure forme une lèvre qui court sur tout le périmètre de l'ouverture présente sur la face inférieure du corps creux rotomoulé.

Préférentiellement, le corps creux rotomoulé comporte une unique ouverture sur sa face inférieure. Préférentiellement, ladite ouverture est de grande dimension, c'est-à-dire que la surface de l'ouverture représente au moins 50% de la surface totale de la face inférieure, préférentiellement au moins 80%, très préférentiellement au moins 90% de la surface totale de la face inférieure.

Optionnellement, un couvercle (non montré sur les figures) présentant des dimensions similaires aux dimensions de ladite ouverture peut être mis en oeuvre. En l'absence de couvercle, la face inférieure de l'élément de lestage reste ouverte de sorte que le béton peut être examiné depuis l'extérieur en observant la face inférieure de l'élément de lestage 10. On note toutefois que le béton n'est pas visible ni susceptible d'être soumis à des chocs liés au contact avec le sol en conditions normales d'utilisation de l'élément de lestage. En effet, l'ouverture formée dans la face inférieure de l'élément de lestage se trouve suffisamment éloignée du sol pour éviter un choc mais suffisamment proche pour que le béton ne soit pas visible sauf si l'observateur se penche au ras du sol.

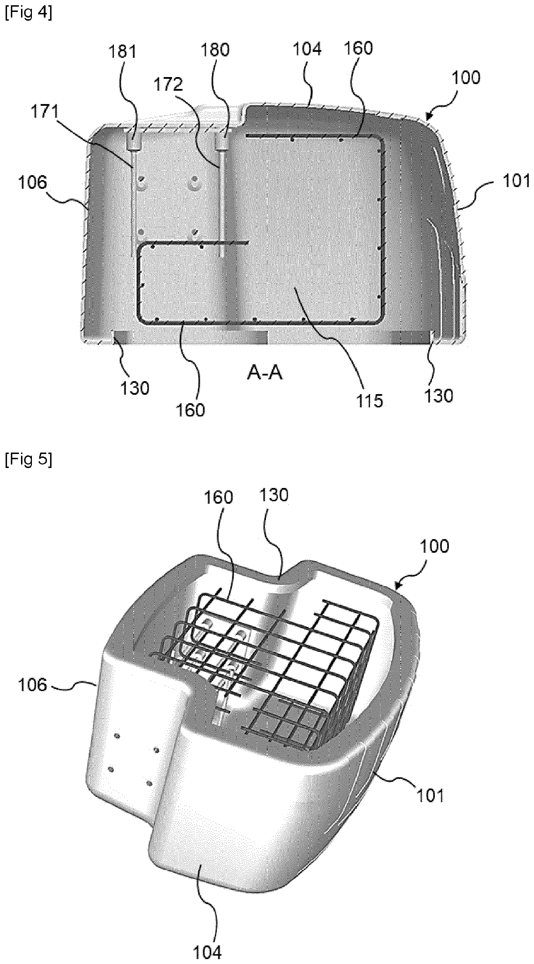

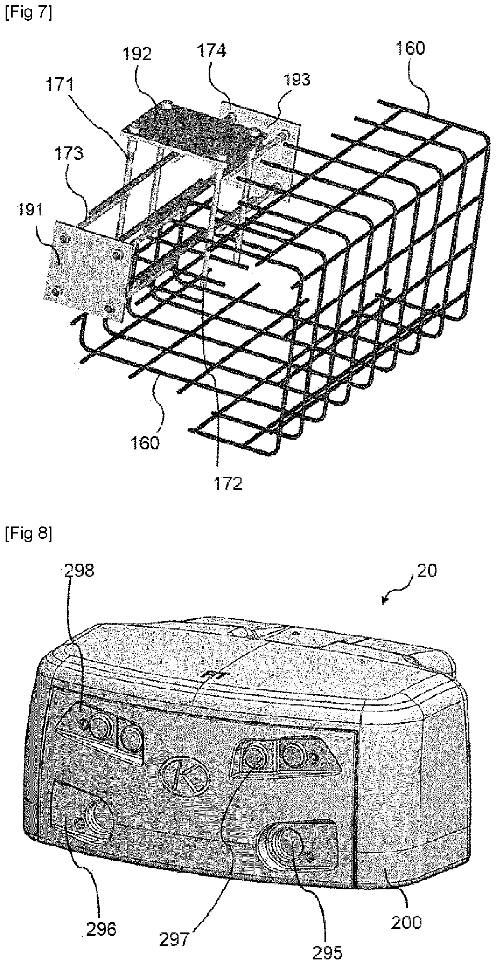

On observe en figures 4, 5 et 6, diverses vues montrant le corps rotomoulé, une armature métallique et des moyens de fixation de l'élément de lestage à l'avant ou à l'arrière d'un véhicule, mis en oeuvre dans l'élément de lestage 10. En figure 7 on observe l'armature métallique et les moyens de fixation de l'élément de lestage à l'avant ou à l'arrière d'un véhicule illustrés seuls. On note que, sur ces figures, le béton coulé dans le volume 115 délimité par le corps creux rotomoulé n'est pas illustré, afin de permettre une meilleure compréhension des figures.

Dans des modes de réalisation, l'élément de lestage 10 comporte une armature métallique 160. Cette armature métallique est placée dans le volume 115 délimité par le corps creux préalablement à une opération de coulage d'un mélange de béton dans ce volume. L'armature 160 est préférentiellement un treillis de barres de fer à béton. Le béton armé formé par la combinaison du mélange de béton et des barres de fer forme un ensemble plus durable et plus résistant que le béton seul. Dans le premier mode de réalisation de l'élément de lestage, le treillis métallique est obtenu par quatre opérations de pliage d'un treillis métallique de sorte à former une spirale à angle droit. Dans d'autres exemples de mise en oeuvre, la forme et la nature de l'armature métallique pourra être adaptée en fonction des besoins.

Dans des modes de réalisation (non illustrés), la face interne 110 de la paroi interne du corps rotomoulé comporte des reliefs configurés pour supporter l'armature métallique, de sorte que l'armature métallique peut reposer sur ces supports au moins le temps de l'opération du coulage du béton, afin de faciliter la fabrication de l'élément de lestage 10.

L'élément de lestage 10 comporte des moyens de fixation de l'élément de lestage à l'avant ou à l'arrière d'un véhicule. Par exemple, ces moyens de fixation comportent une pluralité de tiges filetées horizontales, dont 173 et 174, et verticales, dont 171 et 172, disposées de manière à être noyées profondément dans le béton. Préférentiellement au moins douze tiges filetées de ce type sont prévues. Chaque tige filetée est fixée à une platine 191, 192 ou 193. Ladite platine est accolée à une paroi externe du corps creux rotomoulé. Préférentiellement, le corps de lestage comporte au moins une platine reliée à quatre tiges filetées. Préférentiellement trois platines sont présentes dont une platine 192 sur la face supérieure 104 de l'élément de lestage et deux platines, 191 et 193, sur les faces latérales, 102 et 103, de l'élément de lestage. Avantageusement, une cavité 120 de dimensions similaires aux dimensions de la platine 192 est prévue sur la surface de la face supérieure du corps creux rotomoulé 100 la platine 192 est logée et fixée en place dans la cavité 120.

On peut prévoir, comme cela est montré sur la figure 3, des moyens pour fixer les platines au corps rotomoulé, ces moyens pouvant utiliser des trous 151,152,153,154 aménagés dans le corps rotomoulé.

L'ensemble de ces moyens de fixation assurent une bonne tenue de fixation avec le véhicule et une répartition des contraintes sur une grande partie de l'élément de lestage. Les extrémités des tiges filetées 171, 172, 173 et 174 peuvent traverser le corps creux rotomoulé 100 par des ouvertures prévues à cet effet.

Une pièce intermédiaire tel qu'une potence ou tout autre élément de fixation pourra être fixé sur ces extrémités afin de relier mécaniquement l'élément de lestage à un véhicule. Les parties intermédiaires permettant de rendre solidaire les moyens de fixations de l'élément de lestage 10 et un véhicule sont bien connus et ne sont pas décrits en détail ici.

Des logements, 180 et 181, formés dans la paroi du corps creux rotomoulé pourront être prévus dans la paroi du corps creux rotomoulé 100, afin d'abriter une partie des tiges filetées et une fixation de type écrou.

En figure 8, on observe un deuxième mode de réalisation d'un élément de lestage 20 objet de l'invention. L'élément de lestage 20 diffère principalement de l'élément de lestage 10 en ce qu'il comporte un corps creux rotomoulé 200 de forme différente du corps creux rotomoulé 100 décrit précédemment. En particulier, le corps rotomoulé 200 comporte une pluralité de cavités, 295, 296, 297 et 298 prévues à des fins esthétiques ou configurées pour y positionner des moyens d'éclairage (non représentés). Lesdites cavités peuvent être configurées pour y fixer, coller ou mettre en relief des éléments de signalétique ou de décoration et/ou pour intégrer des éléments d'éclairages. Les éléments d'éclairages sont par exemple des feux de signalisation ou des phares. Dans des modes de réalisation, lesdits feux de signalisation phares sont alimentés sur batterie ou via un cordon d'alimentation. Dans des modes de réalisation, lesdits feux de signalisation phares sont pilotés depuis l'habitacle d'un véhicule auquel l'élément de lestage est fixé.

On souligne que les cavités 295, 296, 297 et 298 sont formées directement lors du rotomoulage du corps creux rotomoulé 200, sans étape d'usinage subséquente.

Plus généralement, on souligne que la technique de rotomoulage permet de créer toute forme de corps creux rotomoulé souhaité pour répondre à des contraintes techniques ou esthétiques. Tout particulièrement, le moule de rotomoulage pourra être conçu pour former un corps creux rotomoulé comportant un sigle, motif ou logo souhaité par un client, par exemple un logo d'entreprise ou de concessionnaire.

On observe en figure 9, présentée sous forme de logigramme, une succession d'étapes particulières d'un procédé 1000 objet de la présente invention.

Le procédé de fabrication 1000 d'un élément de lestage adapté à être fixé à l'avant ou à l'arrière d'un véhicule comporte une étape 1005 de fourniture d'un corps creux rotomoulé délimitant un volume. Le corps creux rotomoulé est par exemple du type de celui décrit au regard des figures 1 à 7.

Le procédé 1000 comporte une étape 1010 de fourniture d'un béton liquide comportant des inserts. On rappelle que, selon l'invention, le volume délimité par le corps creux rotomoulé est rempli au moins en partie d'un mélange de béton comportant des inserts.

Par exemple, les inserts sont choisis parmi la fonte, les oxydes métalliques, la calamine et la magnétite. Préférentiellement, le béton comporte comme inserts des oxydes de fer. Préférentiellement, les inserts sont ajoutés au béton sous forme de poudre ou de fragments de petite taille. Par exemple le diamètre maximal des inserts est compris entre 0,05 et 50 millimètres, préférentiellement le diamètre maximal des inserts est compris entre 0,1 et 30 millimètres. Lesdits inserts sont de densité supérieure à la densité du béton utilisé dans l'élément de lestage.

L'utilisation des inserts permet d'obtenir un béton de haute densité, c'est-à-dire de densité supérieure à la densité habituelle du béton en l'absence d'inserts. Préférentiellement, la quantité d'inserts est fixée de manière à porter le mélange de béton à une densité comprise entre 2,4 g/cm³ et 4,2 g/cm³.

Tout type de béton comportant des inserts et adapté en termes de tenue structurelle et de densité pourra être utilisé sans dévier de l'invention. Les exemples de formulations de mélanges de béton étant très nombreuses et bien connues de l'homme du métier, elles ne sont pas listées ni décrites ici.

Dans des modes de réalisation, le procédé 1000 comporte, préalablement à l'étape de coulage du mélange de béton liquide dans le volume délimité par le corps creux rotomoulé, une étape 1015 de positionnement d'une armature métallique dans le corps creux rotomoulé. Ladite armature métallique est par exemple du type de celle décrite au regard des figures 4 à 7.

Le procédé 1000 comporte une étape 1020 de coulage du mélange de béton liquide dans le volume délimité par le corps creux rotomoulé.

Préférentiellement, le corps creux rotomoulé comporte une ouverture sur sa face orientée vers le sol en conditions d'utilisation normale de l'élément de lestage, du type de celle décrite au regard des figures 1 à 7. Dans ces cas, au cours de l'étape 1020 de coulage, le corps creux rotomoulé est positionné « à l'envers », c'est-à-dire avec sa face inférieure sensiblement orientée vers le ciel, de sorte à recevoir la coulée de béton en travers d'une ouverture prévue sur ladite face inférieure.

Le procédé 1000 comporte une étape 1025 de solidification en place du béton dans le corps creux rotomoulé. A l'issue de cette étape, l'élément de lestage obtenu peut être retourné à l'endroit. Des éléments de fixation avec un véhicule mobile peuvent être montés sur l'élément de lestage.

Dans le procédé 1000 tel qu'il vient d'être décrit, l'ordre dans lequel les différentes étapes sont exécutées correspond à un mode de réalisation avantageux. Il n'y a que les étapes 1020 et 1025 qui doivent obligatoirement se succéder, et l'étape 1025 est la dernière du procédé tel que représenté sur la figure 9.

## Revendications

**1.** Élément de lestage (10, 20) adapté à être fixé à l'avant ou à l'arrière d'un véhicule, **caractérisé en ce qu'**il comporte un corps creux rotomoulé (100, 200) délimitant un volume (115) et **en ce que** ledit volume est rempli au moins en partie d'un mélange de béton comportant des inserts configurés pour augmenter la densité massique du mélange de béton, ledit mélange de béton ayant été coulé à l'état liquide dans ledit volume puis solidifié en place.

**2.** Élément de lestage (10, 20) selon la revendication 1, dans lequel les inserts sont choisis parmi la fonte, les oxydes métalliques, la calamine et la magnétite, et dans lequel la densité du béton coulé dans le corps creux rotomoulé est comprise entre 2,4 g/cm³ et 4,2 g/cm³.

**3.** Élément de lestage (10, 20) selon l'une des revendications 1 ou 2, dans lequel le corps creux rotomoulé (100, 200) comporte au moins une nervure (130) parcourant au moins une partie de la surface du corps creux rotomoulé.

**4.** Élément de lestage (10, 20) selon l'une des revendications 1 à 3, dans lequel le corps creux rotomoulé comporte une ouverture sur la face orientée vers le sol en conditions d'utilisation normale de l'élément de lestage et dans lequel ladite ouverture est configurée pour recevoir la coulée de mélange de béton lors du coulage du mélange de béton dans le corps creux rotomoulé et dans lequel l'au moins une nervure (130) est positionnée au niveau de ladite ouverture.

**6.** Élément de lestage (10, 20) selon l'une des revendications 1 à 5, dans lequel le corps creux rotomoulé est monolithique et formé d'une seule matière.

**7.** Élément de lestage (10, 20) selon l'une des revendications 1 à 6, dans lequel la matière formant le corps creux rotomoulé est du polyéthylène.

**8.** Élément de lestage (10, 20) selon l'une des revendications 1 à 7, dans lequel une armature métallique (160) est insérée dans le volume formé par le corps creux rotomoulé préalablement à la solidification en place du béton.

**9.** Élément de lestage (10) selon l'une des revendications 1 à 8, qui comporte des moyens de fixation de l'élément de lestage à l'avant ou à l'arrière d'un véhicule, ledit moyen de fixation comportant une pluralité de tiges (171, 172, 173, 174) noyées dans le béton et solidaires d'au moins une platine accolée à une paroi externe du corps creux rotomoulé.

**10.** Élément de lestage (10) selon la revendication 9, dans lequel au moins une cavité (120) de dimensions similaires aux dimensions d'une platine (192) est prévue sur une paroi externe du corps creux rotomoulé et dans lequel la platine est logée et fixée en place dans ladite cavité.

**11.** Élément de lestage (10) selon l'une des revendications 9 ou 10, dans lequel au moins une tige est filetée et dans lequel la paroi du corps creux rotomoulé est enserrée entre ladite platine et au moins un écrou vissé sur la tige filetée.

**12.** Élément de lestage (10) selon la revendication 11, qui comporte au moins un logement (180, 181) formé dans la paroi du corps creux rotomoulé configuré pour abriter une partie d'une tige filetée et au moins une partie d'un écrou.

**13.** Élément de lestage (10) selon l'une des revendications 9 à 12, qui comporte une platine (192) sur la face supérieure (104) de l'élément de lestage et deux platines (191, 193), sur les faces latérales (102, 103) de l'élément de lestage.

**14.** Véhicule comportant un élément de lestage (10, 20) **caractérisé en ce qu'**il comporte des moyens de fixation (171, 172, 173, 174, 191, 192, 193) de l'élément de lestage à l'avant ou à l'arrière du véhicule, ledit élément de lestage comportant un corps creux rotomoulé (100, 200) délimitant un volume et **en ce que** ledit volume est rempli au moins en partie d'un béton comportant des inserts configurés pour augmenter la densité massique du béton, ledit béton étant coulé à l'état liquide dans le volume puis solidifié en place.

**15.** Procédé de fabrication (1000) d'un élément de lestage adapté à être fixé à l'avant ou à l'arrière d'un véhicule, **caractérisé en ce qu'**il comporte :
- une étape de fourniture (1005) d'un corps creux rotomoulé délimitant un volume,
- une étape de fourniture (1010) d'un béton comportant des inserts configurés pour augmenter la densité massique du mélange de béton,
- une étape de coulage (1020) du mélange de béton liquide dans le volume délimité par le corps creux rotomoulé et
- une étape de solidification (1025) en place du béton dans le corps creux rotomoulé.
